# EUROPÄISCHE PATENTSCHRIFT

(11) **EP 2 686 221 B1**
(45) Veröffentlichungstag und Bekanntmachung des Hinweises auf die Patenterteilung: **27.04.2016**
(21) Anmeldenummer: 12721259.5
(22) Anmeldetag: 10.05.2012
(51) Int. Cl.: B61D 17/18, B60R 13/02

(54) **FAHRZEUG MIT TEXTILKANAL**
VEHICLE HAVING A TEXTILE CHANNEL
VÉHICULE À CONDUIT TEXTILE

(30) Priorität: 17.05.2011 DE 102011075981
(43) Veröffentlichungstag der Anmeldung: 22.01.2014
(73) Patentinhaber: Siemens Aktiengesellschaft, 80333 München (DE)
(72) Erfinder: HÖFLER, Werner, 201203 Shanghai (CN); ROHWERDER, Dirk, 45549 Sprockhövel (DE)
(86) Internationale Anmeldenummer: PCT/EP2012/058631
(87) Internationale Veröffentlichungsnummer: WO 2012/156272

(56) Entgegenhaltungen:
- DE-A- 4 430 075
- DE-A1- 10 140 985
- DE-A1-102005 040 571

## Beschreibung

Die Erfindung betrifft ein Fahrzeug mit einem Wagenkasten, einer in dem Wagenkasten angeordneten Innenabdeckung und einem sich zwischen dem Wagenkasten und der Innenabdeckung erstreckenden Textilkanal aus einem textilen Flächengebilde zum Führen von klimatisierender Luft, wobei der Textilkanal an dem Wagenkasten angebracht ist.

Ein solches Fahrzeug ist aus der DE 10 2005 040 571 A1 bekannt, die die Anbringung einer textilen Materialbahn an einem Wagenkasten eines Schienenfahrzeugs lehrt.

Aus der Praxis sind Schienenfahrzeuge bekannt, die mit Klimageräten zur Klimatisierung von Fahrgastzellen des Schienenfahrzeugs ausgerüstet sind. Hierbei wird ein Luftstrom erzeugt, der über Belüftungskanäle durch die Fahrgastzellen geführt wird. Dabei ist bekannt, die Belüftungskanäle aus einem textilen Flächengebilde, herzustellen. Hierbei kommt es jedoch oftmals zu Schwierigkeiten bei der Montage, also bei der Anbringung des Textilkanals an den Wagenkasten des Schienenfahrzeugs einerseits sowie an der Innenabdeckung andererseits.

Aufgabe der Erfindung ist es daher, ein Fahrzeug der eingangs genannten Art bereitzustellen, das einen Textilkanal aufweist, der einfach montiert und demontiert werden kann.

Die Erfindung löst diese Aufgabe dadurch, dass der Textilkanal an der Innenabdeckung nur mittels Klettverschluss gehalten ist.

Erfindungsgemäß ist der Textilkanal auf beliebige Art und Weise fest mit dem Wagenkasten verbunden. Beispielsweise ist der Textilkanal an dem Deckenbereich des Wagenkastens aufgehängt. Der Textilkanal kann daher zunächst sicher an dem Wagenkasten befestigt werden. Anschließend wird die Innenabdeckung in den Wagenkasten montiert, wobei der Textilkanal lediglich über einen Klettverschluss mit der Innenabdeckung verbindbar ist. Ein Klettverschluss ist kostengünstig erhältlich und ermöglicht eine einfache und variable Verbindung zwischen Textilkanal und Innenabdeckung. Darüber hinaus kann der Klettverschluss schnell geöffnet und wieder geschlossen werden. Mittel zur Befestigung des Textilkanals am Wagenkasten sind in den Wagenkasten integriert. Dies erfolgt vorteilhafterweise bereits bei der Herstellung des Wagenkastens. Im Rahmen der Erfindung ist daher eine schnelle und leichte und kostengünstige Montage und/oder Demontage ermöglicht. Dadurch werden auch die Kosten des erfindungsgemäßen Fahrzeugs reduziert.

Textile Flächengebilde sind beliebige Stoffe, also Materialien, die aus textilen Rohstoffen, wie Fasern oder Fäden, bestehen. Hierbei soll der Begriff "Faden" sowohl Garne als auch Zwirne, also Fäden aus mehreren Garnen, umfassen. Textile Flächengebilde, die aus Fäden bestehen, werden auch als Fadenverbundstoffe bezeichnet. Sie umfassen alle Gewebe, Maschenwaren, Wirkwaren, Geflechte, Netze und Spitzen und dergleichen. Textile Flächengebilde umfassen jedoch auch so genannte Faserverbundstoffe, die auch als Vliesstoffe bekannt sind. Schließlich sind auch kombinierte Verbundstoffe, also textile Flächengebilde aus unterschiedlichen Schichten, die parallel miteinander verbunden sind, im Rahmen der Erfindung einsetzbar. Der Textilkanal ist zweckmäßigerweise aus mehreren Bahnen des textilen Flächengebildes zusammengenäht.

Vorteilhafterweise ist der Textilkanal mittels Führungsschienen an dem Wagenkasten angebracht, wobei die Führungsschienen fest mit dem Wagenkasten verbunden sind. Gemäß dieser Weiterentwicklung werden bei der Herstellung des Wagenkastens Führungsschienen in den Rohbau eingebettet oder auf sonstige Weise mit diesem verbunden. Hierbei erstrecken sich die Führungsschienen beispielsweise in einer zweckmäßigen Innenisolierung des Wagenkastens. Die Montage des Textilkanals kann anschließend auf einfache Art und Weise von Hand ohne Montagewerkzeug vorgenommen werden.

Gemäß einer diesbezüglich zweckmäßigen Ausgestaltung weisen die Führungsschienen eine Haltenut auf, in der ein fest mit dem Textilkanal verbundener Einführkopf formschlüssig gehalten ist, wobei die Führungsschiene eine in ihrer Längsrichtung beweglich Führung bereitstellt. Gemäß dieser vorteilhaften Ausgestaltung ist der Textilkanal wie eine Gardine oder ein Vorhang über eine Schienenführung mit dem Wagenkasten verbunden. Die Schienenführung ermöglicht eine längsbewegliche Verschiebung der Befestigung des Textilkanals und erhöht somit den Freiheitsgrad bei der Montage. Darüber hinaus ist eine solche Führungsschiene kostengünstig am Markt erhältlich und kann auf einfache Art und Weise mit dem Wagenkasten, beispielsweise durch Anschweißen oder sonstigen Einbettungs- oder Verbindungsmethoden, angebracht werden. Der Einführknopf kann beispielweise als Stoffverdickung ausgebildet sein. Es ist jedoch auch möglich den Einführkopf aus einem anderen Material, beispielsweise aus einem Kunststoff herzustellen, der mit dem Rest des Textilkanals durch zweckmäßige Verbindungsmittel verbunden ist. Bei der Montage wird der Einführkopf in die Führungsschienen eingezogen. Anschließend kann der Textilkanal einfach mittels Klettverschluss an der Innenabdeckung befestigt werden. Bei Reinigung oder Austausch des Textilkanals wird das Klettband gelöst und der komplette Textilkanal aus der Innenabdeckung und den Führungsschienen herausgezogen.

Vorteilhafterweise umfasst die Innenabdeckung wenigstens eine an dem Wagenkasten befestigte Deckenpanele, die mit zwei senkrechten Befestigungsstegen ausgerüstet ist, wobei die Befestigungsstege mit einem Klettband versehen sind und mit einem komplementären Verhakungsteil des Textilkanals den Klettverschluss ausbilden. Selbstverständlich erstreckt sich der Textilkanal gemäß dieser vorteilhaften Weiterentwicklung der Erfindung zwischen der Deckenpanele und dem Wagenkasten. Die Deckenpanele kann modular und vorgefertigt hergestellt werden, wobei sie bereits zweckmäßige Klettverschlussbindungsteile aufweist.

Gemäß einer diesbezüglich zweckmäßigen Weiterentwicklung erstreckt sich der Klettverschluss über die gesamte Länge jeder Deckenpanele, wobei in dem sich zwischen den Verhakungsteilen erstreckenden Abschnitt des Textilkanals, welcher der Deckenpanele zugewandt ist, Luftaustrittsöffnungen vorgesehen sind, die mit Luftausblasöffnungen der Deckenpanele kommunizieren. Mit anderen Worten wird die klimatisierende Luft von dem Textilkanal in einem Zwischenraum transportiert, der von der Decke des Wagenkastens und der Deckenpanele bergrenzt ist. Von dort aus gelangt sie schließlich über die Ausblasöffnungen der Deckenpanele in die Fahrgastzelle. Ein Vorteil des durchgängigen Klettverschlusses, der sich entlang jeder Deckenpanele und somit quasi entlang der gesamten Längserstreckung des Textilkanals beidseitig des Zwischenraums erstreckt, besteht in seiner Dichtwirkung, die er im Hinblick auf den besagten Zwischenraum entfaltet. Diese Dichtwirkung sorgt dafür, dass die Luft nicht seitlich aus dem Zwischenraum austritt und zwischen Wagenkasten und Innenabdeckung verbleibt, sondern gezielt in den Fahrgastraum abgeblasen wird.

Vorteilhafterweise bildet die Deckenpanele zwischen den Befestigungsstegen eine elektrisch isolierte Auflage für den Textilkanal aus. Aufgrund dieser Auflage kann der Textilkanal auf der Deckenpanele aufliegen. Dies erleichtert die Montage noch weiter.

Gemäß einer diesbezüglich zweckmäßigen Weiterentwicklung ist die Auflage mit einer weichen Oberfläche ausgerüstet. Die weiche Oberfläche vermeidet eine Beschädigung des Textilkanals bei fortwährender Reibung, die sich beim Dauerbetrieb des Fahrzeugs ergeben könnte.

Zweckmäßigerweise ist der Textilkanal mit einer inneren Membran ausgestattet, durch welche der Textilkanal in einen Heißluftbereich zum Führen von erwärmter Luft und einen Kaltluftbereich zum Führen von gekühlter Luft unterteilt ist. Auf diese Art und Weise können beliebige Temperaturen in dem Inneren des Fahrzeugs erzeugt werden.

Zweckmäßigerweise besteht der Textilkanal aus einem nicht brennbaren Material. Nicht brennbare textile Flächengebilde sind dem Fachmann bekannt. Nur beispielhaft sei deshalb hier der Industriestoff "Trevira" zur Herstellung des Textilkanals genannt.

Weitere zweckmäßige Ausgestaltungen und Vorteile der Erfindung sind Gegenstand der nachfolgenden Beschreibung von Ausführungsbeispielen der Erfindung unter Bezug auf die Figuren der Zeichnung, wobei gleiche Figuren auf gleich wirkende Bezugszeichen verweisen und wobei
- Figur 1: ein Ausführungsbeispiel des erfindungsgemäßen Fahrzeugs in einer geschnittenen Seitenansicht und
- Figur 2: eine Deckenpanele des Fahrzeugs gemäß Figur 1 in einer perspektivischen Ansicht zeigen.

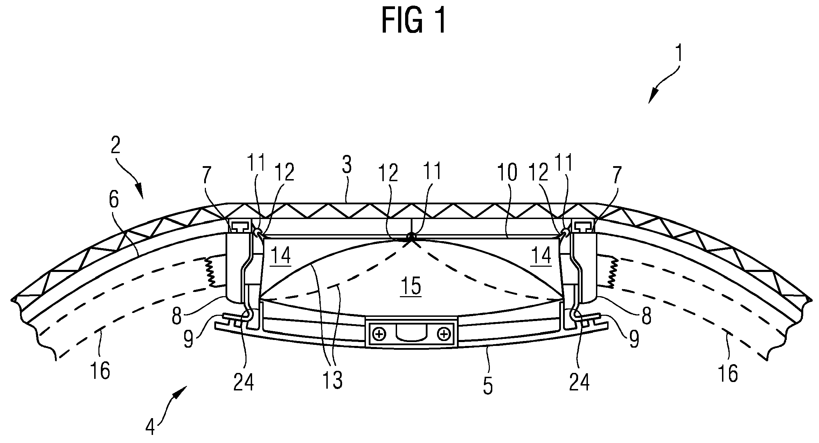

Figur 1 zeigt ein Ausführungsbeispiel des erfindungsgemäßen Fahrzeugs 1 in einer geschnittenen Seitenansicht. Es ist erkennbar, dass das Fahrzeug 1 einen Wagenkasten 2 aufweist, der neben der gezeigten Wagenkastendecke 3 figürlich nicht dargestellte Seitenwände und einen der Wagenkastendecke gegenüberliegenden Wagenkastenboden aufweist. Das Innere des Wagenkastens 2 bildet in dem in Figur 1 gezeigten Ausführungsbeispiel eine Fahrgastzelle aus, die zur Beförderung von Fahrgästen dient. Aus ästhetischen Gründen werden Verkabelungen, Lüftungskanäle und dergleichen durch eine Innenabdeckung 4 blickdicht abgeschirmt, von der in Figur 1 lediglich eine Deckenpanele 5 erkennbar ist.

Zur Befestigung der Deckenpanele 5 an der Wagenkastendecke 3 sind in einer sich an der Innenwand des Wagenkastens 2 erstreckenden Isolierschicht 6 zwei C-Schienen 7 fest vergossen. Mit Hilfe einer Nutensteinverbindung sind Haltearme 8 an den C-Schienen und somit an dem Wagenkasten 2 befestigt, wobei die Deckenpanele 5 mit Hilfe von Befestigungslaschen 9 mit den Haltearmen 8 fest verschraubt ist. Zwischen der Deckenpanele 5 und Wagenkastendecke 3 erstreckt sich ein Textilkanal 10. Der Textilkanal 10 besteht aus einem textilen Flächengebilde, das nur schwer entflammbar ist. Um den Textilkanal 10 schnell und kostengünstig montieren und gegebenenfalls demontieren zu können, ist dieser an der Wagenkastendecke 3 aufgehängt und an der Deckenpanele 5 lediglich durch einen Klettverschluss 24 gehalten.

Zur Befestigung oder zum Aufhängen des Textilkanals 10 an der Wagenkastendecke 3 sind in der Isolierschicht 6 mit der Wagenkastedecke 3 verbundene Führungsschienen 11 vergossen. Die Führungsschienen 11 weisen eine Aufnahmenut auf, in der Einführköpfe 12 des Textilkanals 10 formschlüssig gehalten sind. Entsprechend einer Gardinenhalterung sind die Einführköpfe 12 über Stoffbahnen mit dem restlichen Material des Textilkanals 10 verbunden, wobei die Führungsschienen 11 eine Führung der Einführköpfe 12 in Längsrichtung des Wagenkastens 2 ermöglichen. Die Einführköpfe 12 des Textilkanals 10 werden stirnseitig in die bereits fest in den Wagenkasten 2 integrierten Führungsschienen 11 geschoben, so dass der gesamte Textilkanal 10 leicht nachträglich an die Wagenkastendecke 3 gehängt werden kann. Die längsbewegliche Führung der Einführköpfe 12 erleichtert die Montage und Demontage des Textilkanals 10.

Der Textilkanal 10 weist eine innere Membran 13 auf, die einen Warmluftbereich 14 von einem Kaltluftbereich 15 trennt. Die Membran ist in zwei Stellungen gezeigt. In der mit durchgezogenen Linien dargestellten Stellung der Membran 13 ist der Kaltluftbereich 15 mit Druck beaufschlagt. Der Fahrgastraum wird gekühlt. Zum Heizen des Fahrgastraumes wird erwärmte Luft in den Warmluftbereich 14 geblasen, so dass die innere Membran 13, die in die mit gestrichelter Linie angedeutete Stellung übergeht und diese erwärmte Luft über Warmluftschläuche 16 in die Bodenkanäle geleitet wird.
Die Umlenkung der Warm-/Kaltluft in den Textilkanal wird durch eine Luftverteilbox am Klimagerät gesteuert.

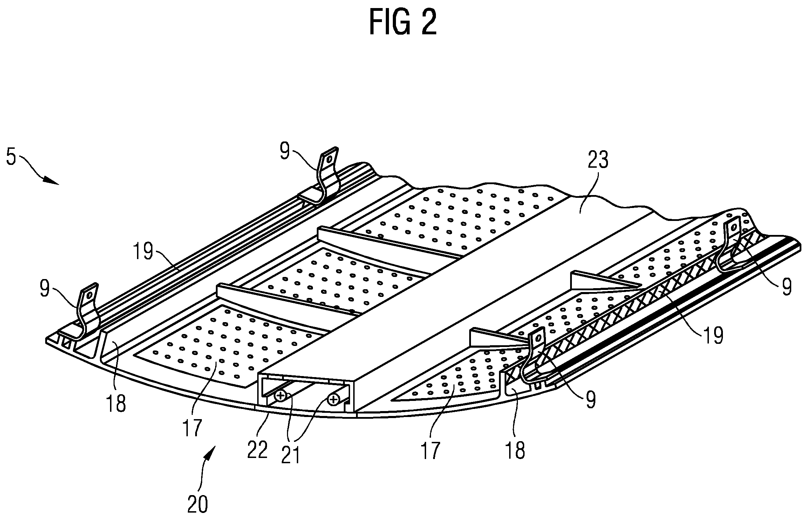

Figur 2 zeigt eine perspektivische Darstellung der Deckenpanele 5. In dieser Darstellung zum einen die Befestigungslaschen 9 zur Befestigung der Deckenpanele 5 an den Haltarmen 8 erkennbar. Die Deckenpanele 5 weist Ausblasabschnitte 17 mit Ausblasöffnungen auf, über die durch den Textilkanal 10 transportierte Luft in die Fahrgastzelle ausgeblasen werden. Die Ausblasabschnitte 17 erstrecken sich zwischen zwei Befestigungsstegen 18, die an ihren voneinander abgewandten Seiten jeweils ein Klettband 19 aufweisen. Die Befestigungsstege 18 und das Klettband 19 erstrecken sich in Längsrichtung der Deckenpanele 5 über die gesamte Länge der Deckenpanele 5 hinweg.

In der Mitte der Deckenpanele 5 ist eine Beleuchtung 20 erkennbar, die zur Beleuchtung der Fahrgastzelle dient. Hierzu weist die Beleuchtungseinrichtung 20 zweckmäßige Leuchtstoffröhren 21 auf, die sich ebenfalls in Längsrichtung der Deckenpanele 5 erstrecken. Die Leuchtstoffröhren sind durch eine transparente Kunststoffscheibe 22 zum Inneren des Wagenkastens 2 abgedeckt. Oberhalb der Kunststoffscheibe 22 bildet die Lampeneinrichtung 20 eine elektrische isolierte Auflage 23 aus, die mit einem isolierenden und weichen Material beschichtet ist. Auf dieser Auflage liegt der Textilkanal 10 frei, also ohne Befestigung, auf.

Mit Bezug auf Figur 1 ist erkennbar, dass der Textilkanal 10 an seinen beiden Seiten zwei sich in Längsrichtung erstreckende Stoffbahnen aufweist, die mit dem Klettband 19 der Befestigungsstege 18 den Klettverschluss 24 ausbilden. Mit anderen Worten ist jede der Stoffbahnen mit einem Verhakungsteil oder aber einem Hakenteil des Klettverschlusses ausgerüstet, das mit dem Klettband 19 den Klettverschluss 24 ausgebildet. Zwischen den Verhakungsteilen der Stoffbahnen sind in dem Textilkanal 10 Luftaustrittsöffnungen eingebracht. Durch die Luftaustrittsöffnungen kann die Luft in einen Zwischenraum eintreten, der von dem Textilkanal 10 und der Deckenpanele 5 begrenzt ist. Von hier aus gelangt die klimatisierende Luft über die Luftausblasöffnungen der Deckenpanele 5 in die Fahrgastzelle im Inneren des Wagenkastens 2. Dabei entfaltet der Klettverschluss 19, 24 eine Dichtwirkung, so dass die klimatisierende Luft aus dem von Textilkanal 10 und Deckenpanele 5 begrenzten Zwischenraum über die Ausblasöffnung der Deckenpanele 5 in das Fahrgastinnere gelangt und nicht seitlich aus dem Zwischenraum austritt, um im Wesentlichen zwischen Wagenkasten 2 und Innenabdeckung 4 zu verbleiben.

## Patentansprüche

1. Fahrzeug (1) mit einem Wagenkasten (2), einer in dem Wagenkasten angeordneten Innenabdeckung (4) und einem sich zwischen dem Wagenkasten (2) und der Innenabdeckung (4) erstreckenden Textilkanal (10) aus einem textilen Flächengebilde zum Führen von klimatisierender Luft, wobei der Textilkanal (10) an dem Wagenkasten (2) angebracht ist,
**dadurch gekennzeichnet, dass**
der Textilkanal (10) an der Innenabdeckung (4) mittels Klettverschluss (24) gehalten ist.

2. Fahrzug (1) nach Anspruch 1,
**dadurch gekennzeichnet, dass**
der Textilkanal (10) mittels Führungsschienen (11) an dem Wagenkasten (2) angebracht ist, wobei die Führungsschienen (11) fest mit dem Wagenkasten (2) verbunden sind.

3. Fahrzeug (1) nach Anspruch 2,
**dadurch gekennzeichnet, dass**
die Führungsschienen (11) eine Haltenut aufweisen, in dem ein fest mit dem Textilkanal (10) verbundener Einführkopf (12) formschlüssig gehalten ist, wobei die Führungsschienen (11) eine in ihrer Längsrichtung bewegliche Führung bereitstellen.

4. Fahrzeug (1) nach einem der vorhergehenden Ansprüche,
**dadurch gekennzeichnet, dass**
die Innenabdeckung (4) wenigstens eine an dem Wagenkasten (3) befestigte Deckenpanele (5) aufweist, die mit zwei senkrechten Befestigungsstegen (18) ausgerüstet ist, wobei die Befestigungsstege (18) mit einem Klettband (19) ausgerüstet sind und mit einem komplementären Verhakungsteil des Textilkanals (10) den Klettverschluss (24) ausbilden.

5. Fahrzeug (1) nach Anspruch 4,
**dadurch gekennzeichnet, dass**
sich der Klettverschluss (24) über die gesamte Länge jeder Deckenpanele (5) erstreckt, wobei in dem sich zwischen den Verhakungsteilen erstreckenden Bereich des Textilkanals (10), welcher der Deckenpanele (5) zugewandt ist, Luftaustrittsöffnungen vorgesehen sind, die mit Luftausblasöffnungen in der Deckenpanele (5) kommunizieren.

6. Fahrzeug (1) nach Anspruch 5,
**dadurch gekennzeichnet, dass**
die Deckenpanele (5) zwischen den Befestigungsstegen (18) eine Auflage (23) für den Textilkanal (10) ausbildet.

7. Fahrzeug (1) nach Anspruch 6,
**dadurch gekennzeichnet, dass**
die Auflage (23) elektrisch isoliert ist.

8. Fahrzeug (1) nach einem der vorhergehenden Ansprüche,
**dadurch gekennzeichnet, dass**
der Textilkanal (10) mit einer inneren Membran (13) ausgestattet ist, durch die der Textilkanal (10) in einen Heißluftbereich (14) zum Führen von erwärmter Luft und einen Kaltluftbereich (15) zum Führen von gekühlter Luft unterteilt ist.

9. Fahrzeug (1) nach einem der vorhergehenden Ansprüche,
**dadurch gekennzeichnet, dass**
der Textilkanal (10) aus einem nicht brennbaren textilen Flächengebilde ausgebildet ist.

## Claims

1. Vehicle (1) with a body (2), an inner covering (4) arranged in the body and a textile duct (10) which extends between the body (2) and the inner covering (4) and is composed of a textile fabric, for conducting air-conditioning air, wherein the textile duct (2) is attached to the body (2), **characterized in that** the textile duct (10) is held on the inner covering (4) by means of a touch-and-close fastener (24).

2. Vehicle (1) according to Claim 1, **characterized in that** the textile duct (10) is attached to the body (2) by means of guide rails (11), wherein the guide rails (11) are fixedly connected to the body (2).

3. Vehicle (1) according to Claim 2, **characterized in that** the guide rails (11) have a retaining groove in which an insertion head (12), which is fixedly connected to the textile duct (10), is held in a form-fitting manner, wherein the guide rails (11) provide a guide which is movable in the longitudinal direction thereof.

4. Vehicle (1) according to one of the preceding claims, **characterized in that** the inner covering (4) has at least one ceiling panel (5) which is fastened to the body (3) and is equipped with two vertical fastening webs (18), wherein the fastening webs (18) are equipped with a touch-and-close strap (19) and, together with a complementary interlocking part of the textile duct (10), form the touch-and-close fastener (24).

5. Vehicle (1) according to Claim 4, **characterized in that** the touch-and-close fastener (24) extends over the entire length of each ceiling panel (5), wherein air outlet openings which communicate with air blow-out openings in the ceiling panel (5) are provided **in that** region of the textile duct (10) which extends between the interlocking parts and which faces the ceiling panel (5).

6. Vehicle (1) according to Claim 5, **characterized in that** the ceiling panel (5) forms a support (23) between the fastening webs (18) for the textile duct (10).

7. Vehicle (1) according to Claim 6, **characterized in that** the support (23) is electrically insulated.

8. Vehicle (1) according to one of the preceding claims, **characterized in that** the textile duct (10) is provided with an inner membrane (13) by means of which the textile duct (10) is divided into a hot air region (14) for conducting heated air and a cold air region (15) for conducting cooled air.

9. Vehicle (1) according to one of the preceding claims, **characterized in that** the textile duct (10) is formed from a non-combustible textile fabric.

## Revendications

1. Véhicule ( 1 ) ayant une caisse ( 2 ), un recouvrement ( 4 ) intérieur disposé dans la caisse et un canal ( 10 ) en une étoffe textile s'étendant entre la caisse ( 2 ) et le recouvrement ( 4 ) intérieur pour le passage d'air conditionné, le canal ( 10 ) en textile étant mis sur la caisse ( 2 ),
**caractérisé en ce que**
le canal ( 10 ) en textile est maintenu sur le recouvrement ( 4 ) intérieur au moyen d'une fermeture ( 24 ) autoagrippante.

2. Véhicule ( 1 ) suivant la revendication 1,
**caractérisé en ce que**
le canal ( 10 ) en textile est mis sur la caisse ( 2 ) au moyen de barres ( 11 ) de guidage, les barres ( 11 ) de guidage étant reliées fixement à la caisse ( 2 ).

3. Véhicule ( 1 ) suivant la revendication 2,
**caractérisé en ce que**
les barres ( 11 ) de guidage ont une rainure de retenue, dans laquelle une tête ( 12 ) est reliée fixement au canal ( 10 ) en textile et retenue à complémentarité de forme, les barres ( 11 ) de guidage procurant un guidage mobile dans leur direction longitudinale.

4. Véhicule ( 1 ) suivant l'une des revendications précédentes,
**caractérisé en ce que**
le recouvrement ( 4 ) intérieur a au moins un panneau ( 5 ) de plafond, qui est fixé à la caisse ( 3 ) et qui est équipé de deux entretoises ( 18 ) de fixation verticales, les entretoises ( 18 ) de fixation étant équipées d'un ruban ( 19 ) autoagrippant et formant la fermeture ( 24 ) autoagrippante avec une partie complémentaire de crochet du canal ( 10 ) en textile.

5. Véhicule ( 1 ) suivant la revendication 4,
**caractérisé en ce que**
la fermeture ( 24 ) autoagrippante s'étend sur toute la longueur de chaque panneau ( 5 ) de plafond, dans lequel, dans la partie, s'étendant entre les parties d'accrochage, du canal ( 10 ) en textile, qui est tournée vers les panneaux ( 5 ) de plafond, sont prévues des ouïes de sortie d'air, qui communiquent avec des ouïes d'insufflation d'air dans le panneau ( 5 ) de plafond.

6. Véhicule ( 1 ) suivant la revendication 5,
**caractérisé en ce que**
le panneau ( 5 ) de plafond forme entre les entretoises ( 18 ) de fixation un support ( 23 ) pour le canal ( 10 ) en textile.

7. Véhicule ( 1 ) suivant la revendication 6,
**caractérisé en ce que**
le support ( 23 ) est isolé électriquement.

8. Véhicule ( 1 ) suivant l'une des revendications précédentes,
**caractérisé en ce que**
le canal ( 10 ) en textile est pourvu d'une membrane ( 13 ) intérieure, par laquelle le canal ( 10 ) en textile est subdivisé en une partie ( 14 ) pour le passage d'air réchauffé et en une partie ( 15 ) pour le passage d'air refroidi.

9. Véhicule ( 1 ) suivant l'une des revendications précédentes,
**caractérisé en ce que**
le canal ( 10 ) en textile est en une étoffe textile incombustible.
